# EUROPÄISCHE PATENTANMELDUNG

(11) **EP 0 635 343 A1**
(43) Veröffentlichungstag der Anmeldung: **25.01.1995**
(21) Anmeldenummer: 94111329.2
(22) Anmeldetag: 19.07.1994
(51) Int. Cl.: B29B 7/48

(54) **Mehrwellige Schneckenmaschine**

(30) Priorität: 21.07.1993 AT 1445/93
(71) Anmelder: Blach, Josef, A-5310 Mondsee (AT)
(72) Erfinder: Blach, Josef, A-5310 Mondsee (AT)
(74) Vertreter: Bögl, Wolfgang, Dipl.-Ing.

(57) **Zusammenfassung**

Die Erfindung betrifft eine mehrwellige Schneckenmaschine, bei der in einem feststehenden Gehäuse eine Mehrzahl von um einen Arbeitsraum herum kreisförmig angeordnete miteinander kämmende Förderwellen (3) angeordnet sind. Für den Antrieb der Förderwellen ist eine Antriebsanordnung vorgesehen, welche aus einem zentralen Zahnrad (7), Zahnrädern (8,8') an den Förderwellen und einem Hohlzahnrad an der Gehäuseinnenwand besteht. Um den Modus der Zahnräder optimal gestalten zu können, ist vorgeschlagen, die Zahnräder von benachbarten Förderwellen axial gegeneinander versetzt anzuordnen.

## Beschreibung

Die Erfindung betrifft einen mehrwellige Schneckenmaschine mit einem feststehenden Gehäuse und mehreren in einem Arbeitsraum im Gehäuse ringförmig, achsparallel und drehbar angeordneten, gleichsinnig antreibbaren, miteinander kämmenden Förderwellen , welche mit wenigstens einem Zahnrad versehen sind, das mit einem zentralen Zahnrad im Eingriff steht, wobei das zentrale Zahnrad, die Zahnräder der Förderwellen und ein Hohlzahnrad am Innenumfang des Gehäuses in der Art eines Planetengetriebes zusammenwirken.

Eine solche Schneckenmaschine ist bekannt (DE-C-40 01 986). Bei der bekannten Schneckenmaschine ist an wenigstens einem Ende der Förderwellen ein Zahnrad angeordnet. Diese Zahnräder der Förderwellen stehen sowohl mit einem zentralen Zahnrad als auch mit einem Hohlzahnrad am Innenumfang des Gehäuses im Eingriff. Wenn das mit einer zentralen Antriebswelle verbundene zentrale Zahnrad angetrieben wird , dann wird diese Drehbewegung auf die Zahnräder der Förderwellen übertragen, wodurch diese um die eigene Achse und zusätzlich alle um die Längsachse der zentralen Antriebswelle drehen.

Der Nachteil der bekannten Vorrichtung besteht darin , daß der maximale Kopfkreisdurchmesser der Zahnräder durch den Achsabstand der Förderwellen vorgegeben ist, d.h. er muß stets kleiner als dieser Achsabstand sein. Dadurch sind der Modul und/oder die Zähnezahl begrenzt ,so daß infolge dieser mechanischen Grenzen die Größe der vom Antrieb auf die Förderwellen übertragbaren Kraft und damit die Leistungsfähigkeit der Schneckenmaschine begrenzt ist. Darüberhinaus besteht der Nachteil, daß die mechanische Anpassung der Schneckenmaschine an das durchzuführende Bearbeitungsverfahren meist nicht möglich ist.

Das der Erfindung zugrunde liegende technische Problem besteht deshalb darin, die bekannte Schneckenmaschine in der Weise zu verbessern, daß der Modul der Zahnräder zur Kraftübertragungsanordnung auf die Förderwellen vergrößert werden kann und eine optimale Einstellung der Schneckenmaschine auf die verschiedenen Anforderungen der mechanischen Verfahrenstechnik möglich ist.

Dieses technische Problem ist erfindungsgemäß dadurch gelöst, daß die Zahnräder von zwei benachbarten Förderwellen axial zueinander versetzt angeordnet sind.

Durch diese Maßnahme können die Zahnräder einen größeren Kopfkreisdurchmesser als durch den Achsabstand der Förderwellen vorgegeben erhalten, so daß das auf die Förderwellen übertragene Drehmoment erhöht werden kann. Die optimale Anpassung der Schneckenmaschine an das durchzuführende Bearbeitungsverfahren ist nun über einen größeren Bereich möglich, weil die Lage der Förderwellen zueinander verändert werden kann. Das Bearbeitungsverfahren ist durch eine Veränderung des radialen und/oder axialen Spiels zwischen zwei benachbarten Förderwellen möglich. Die Größe des Spiels wird entsprechend der Bearbeitungsart und des zu verarbeitenden Werkstoffes gewählt.

Grundsätzlich gilt, daß der Steuerbereich des Spiels umso größer ist, je größer das Anfangsspiel zwischen den Förderwellen ist. Wenn nur eines der Hohlzahnräder oder eines der zentralen Zahnräder gegenüber dem anderen in Umfangsrichtung verdreht wird, dann ändert sich der Achsabstand zwischen den Förderwellen. Dadurch wird die Schichtdicke des bearbeiteten Werkstoffes am Umfang der Förderwellen verändert. Wenn beide Hohlzahnrad-Hälften oder beide zentralen Zahnräder in Umfangsrichtung gegeneinander verdreht werden, dann wird das axiale Spiel an den Flanken der Förderwellen verändert, wodurch die Förderung des bearbeiteten Werkstoffes beeinflußt wird. Bei der erfindungsgemäßen Schneckenmaschine können die Betriebsparameter in einem großen Umfang verändert werden. Davon ist beispielsweise der Stoffaustausch betroffen, welcher für die Be- oder Entgasung des bearbeiteten Werkstoffes wichtig ist, oder eine Veränderung des Schichtdicken und/oder der Füllgrad bzw. die Verweildauer des Werkstoffes.

Vorteilhafte Einzelheiten der Erfindung sind in den Ansprüchen 2 bis 8 enthalten. Sie ist nachstehend anhand der in den Figuren 1 bis 8 gezeigten Ausführungsbeispielen erläutert. Es zeigen :
- Fig.1: ein Ausführungsbeispiel der erfindungsgemäßen mehrwelligen Schneckenmaschine
- Fig.2: ein anderes Ausführungsbeispiel der erfindungsgemäßen Schneckenmaschine
- Fig.3: den Längsschnitt durch ein Ausführungsbeispiel der Antriebsanordnung einer Schneckenmaschine ,
- Fig.4: den Querschnitt entlang der Linie AB durch die Vorrichtung gemäß Fig.3,
- Fig.5: den Längsschnitt entlang der Linie CC in Fig. 6 durch eine andere Ausführungsform der Antriebsanordnung einer Schneckenmaschine,
- Fig.6: den Querschnitt entlang der Linie AA durch die Vorrichtung gemäß Fig.5,
- Fig.7: den Querschnitt entlang der Linie BB durch die Vorrichtung gemäß Fig.5 und
- Fig.8: den Längsschnitt durch ein weiteres Ausführungsbeispiel der Antriebsanordnung einer Schneckenmaschine .

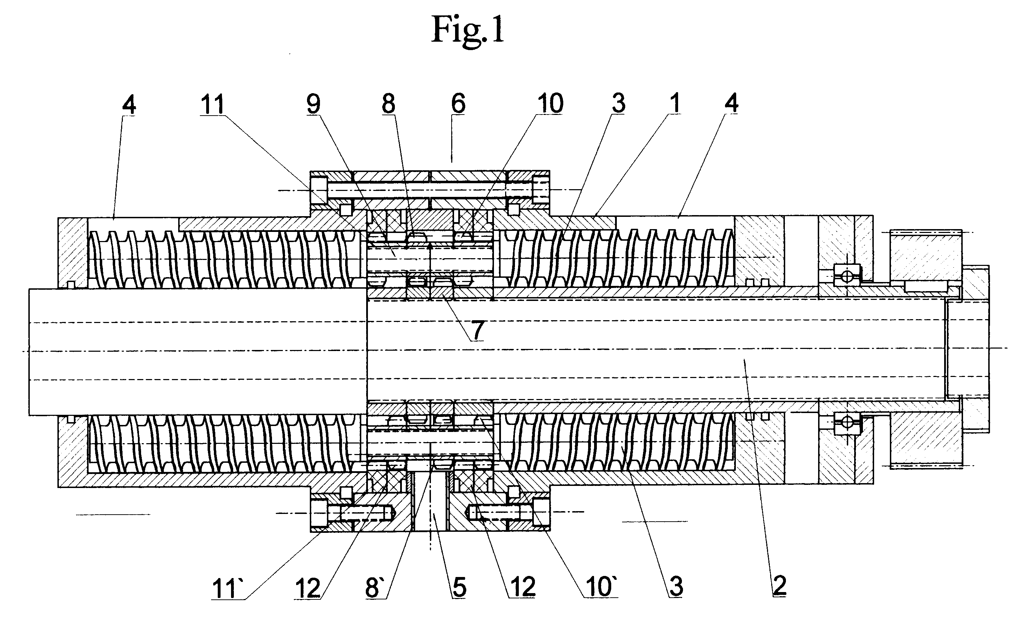

Die Schneckenmaschine gemäß Fig. 1 besteht aus dem Gehäuse 1 und den zwischen der Welle 2 und der Innenfläche des Gehäuses 1 kreisförmig angeordneten Förderwellen 3. Bei der in Fig. 1 gezeigten Schneckenmaschine ist die Anordnung entsprechend der Steigung der Förderwellen 3 so getroffen, daß der zu bearbeitende Werkstoff durch die Öffnungen 4 zugeführt und durch die Öffnung 5 abgeführt wird.

In der Mitte der Schneckenmaschine befindet sich dessen Antriebsanordnung 6. Die Antriebsanordnung 6 verdeutlicht jeweils den Antrieb von zwei Förderwellen 3. Bei den beiden in Fig.1 gezeigten Förderwellen 3 soll es sich um zwei benachbarte Förderwellen handeln.

Der aus Fig.1 ersichtliche Antrieb für die eine Förderwelle 3 besteht aus der angetriebenen Welle 2 und dem mit dieser verbundenen zentralen Zahnrad 7. Das Zahnrad 8 kämmt mit dem zentralen Zahnrad 7; es ist kraft- oder formschlüssig mit der durchgehenden Welle 9 der Förderwellen 3 verbunden. Mit der Welle 9 sind auch die Zahnräder 10 und 11 kraft- oder formschlüssig verbunden, welche mit dem Hohlzahnrad 12 kämmen.

Der Antrieb der zweiten Förderwelle 3 ist im Prinzip identisch mit dem Antrieb der ersten Förderwelle. Der Unterschied besteht lediglich darin, daß die Zahnräder 8',10'und 11'axial gegenüber den Zahnrädern 8,10 und 11 auf der Welle 9 versetzt angeordnet sind.

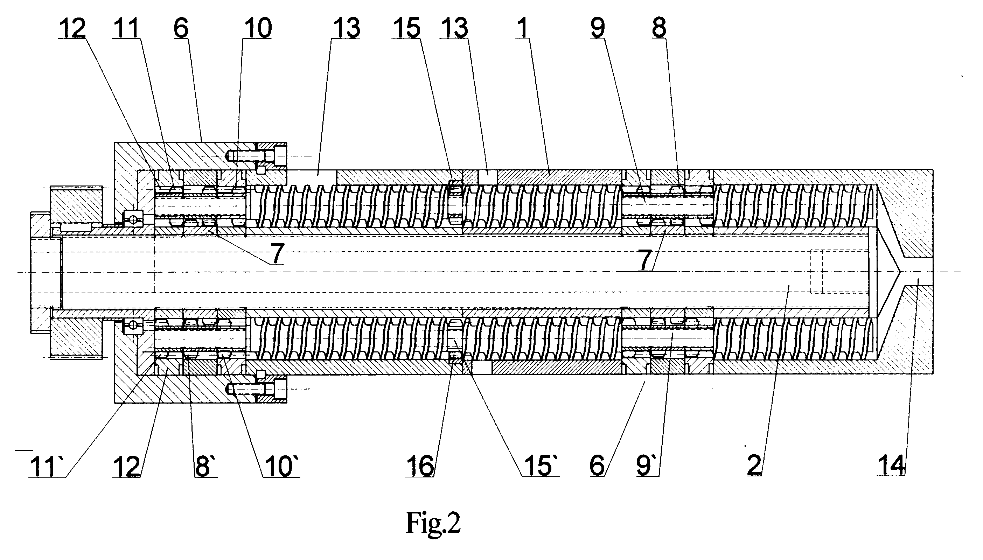

Die in Fig.2 gezeigte Schneckenmaschine ist im wesentlichen in gleicher Weise wie die Schneckenmaschine gemäß Fig.1 aufgebaut. Ein Unterschied besteht darin, daß für die radiale Zuführung des zu bearbeitenden Werkstoffes die Öffnungen 13 und für den axialen Ausstoß des bearbeiteten Werkstoffes die Öffnung 14 vorgesehen ist.

Ein weiterer Unterschied besteht darin, daß die Förderwellen 3 zwischen den Antriebsanordnungen 6 mit einem Zahnrad 15 bzw.15' versehen sind, welche mit dem Hohlzahnrad 16 kämmen und sich an diesem abstützen. Bei dem in Fig. 2 gezeigten Ausführungsbeispiel besitzen die Förderwellen 3 ein sich über ihre gesamte Länge erstreckende Wellen 9 bzw. 9'.Die Wellen können aber auch längs unterteilt ausgebildet sein, so daß die Förderwellen in verschiedenen Längenbereichen der Schneckenmaschine unterschiedlich arbeiten.

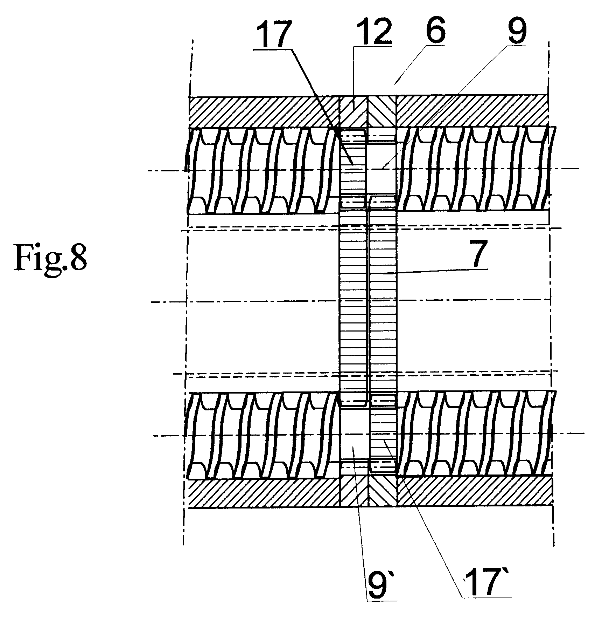

Die einfachste Ausführungsform einer Antriebanordnung für die Förderwellen 3 ist in Fig.8 gezeigt. Das zentrale Zahnrad 7 und das Hohlzahnrad 12 sind identisch mit den entsprechenden Bauteilen in Fig.1 und Fig.2 . Bei der Ausführungsform der Antriebsanordnung 6 gemäß Fig.8 ist pro Förderwelle 3 auf der Welle 9 bzw.9'nur ein Zahnrad 17 bzw.17'vorhanden. Die Zahnräder 17 und 17'sind axial zueinander versetzt angeordnet.

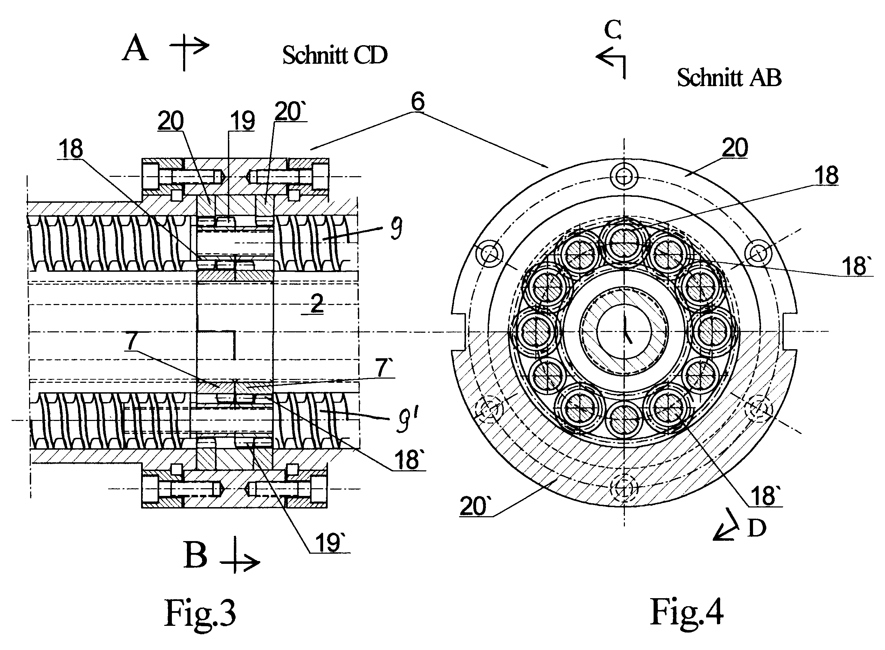

Bei dem in den Figuren 3 und 4 gezeigten Ausführungsbeispiel der Antriebsanordnung 6 sind auf jeder Welle 9 bzw. 9'zwei Zahnräder 18 bzw. 18'und 19 bzw.19'angeordnet. Außerdem ist das zentrale Zahnrad axial in die Teil-Zahnräder 7 und 7'unterteilt, welche in Umfangsrichtung gegeneinander um einen geringen Winkel verdrehbar sein sollen.Desgleichen ist das Hohlzahnrad in zwei mit Abstand voneinander angeordnete Hohlzahnradhälften 20 und 20'unterteilt. Bei dem Ausführungsbeispiel gemäß den Figuren 3 und 4 kämmen die Zahnräder 19 bzw. 19'mit den zentralen Zahnrädern 7 bzw. 7'und die Zahnräder 18 bzw. 18'mit den Hohlzahnradhälften 20 bzw. 20'.

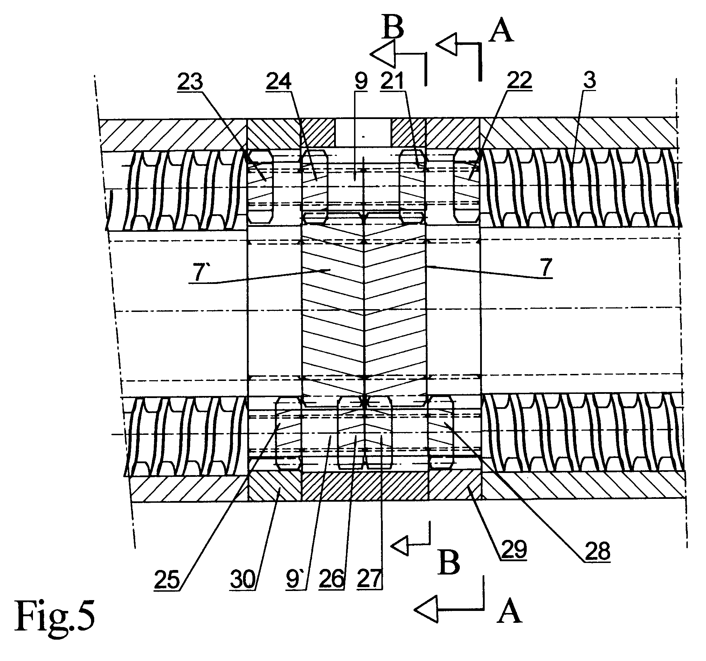

In den Figuren 5,6 und 7 ist ein Ausführungsbeispiel der Antriebsanordnung 6 gezeigt, bei der pro Förderwelle 3 vier Zahnräder vorhanden sind. Das zentrale Zahnrad ist ebenfalls in die Zahnräder 7 und 7'unterteilt. Die Zahnräder 21, 22, 23 und 24 sind auf der Welle 9 und die Zahnräder 25, 26, 27 und 28 auf der Welle 9'angeordnet. Die Zahnräder 21 und 27 kämmen mit dem zentralen Zahnrad 7 und die Zahnräder 22 und 28 kämmen mit dem Hohlzahnrad 29. Die Zahnräder 24 und 26 kämmen mit dem zentralen Zahnrad 7'und die Zahnräder 23 und 25 kämmen mit dem Hohlzahnrad 30.

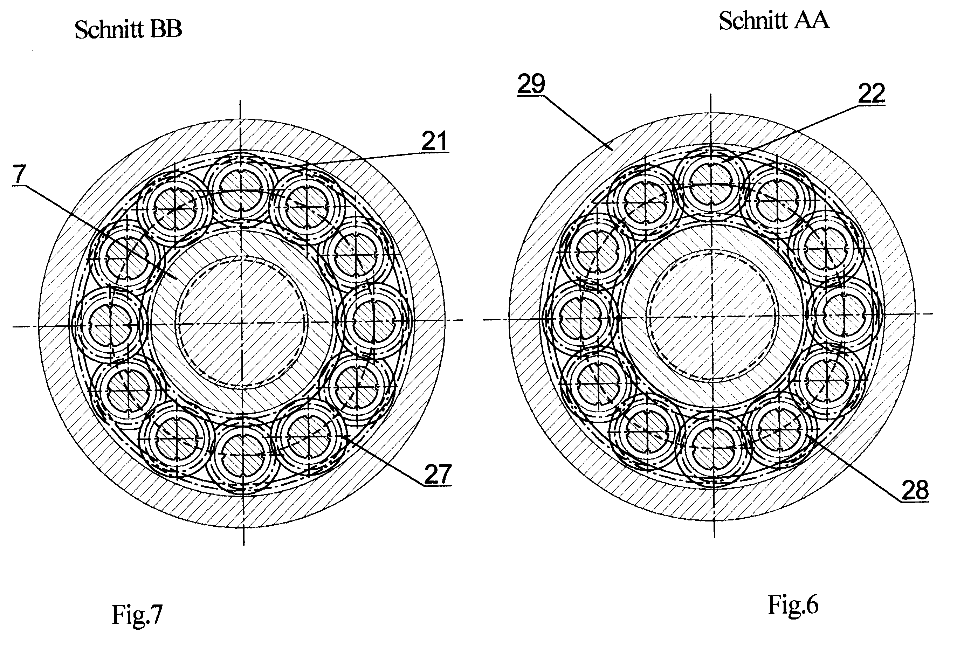

Die aus den Figuren 6 und 7 ersichtlichen Schnitte verdeutlichen, daß durch die axial versetzte Anordnung der Zahnräder auf der Welle 9 bzw. 9'für deren Kopfkreisdurchmesser mehr Platz zur Verfügung steht als bei der bekannten Schneckenmaschine.

## Patentansprüche

1. Mehrwellige Schneckenmaschine mit einem feststehenden Gehäuse und mehreren in einem Arbeitsraum im Gehäuse ringförmig,achsparallel und drehbar gelagert angeordneten, gleichsinnig antreibbaren, miteinander kämmenden Förderwellen, welche mit wenigstens einem Zahnrad versehen sind, das mit einem zentralen Zahnrad im Eingriff steht, wobei das zentrale Zahnrad, die Zahnräder der Förderwellen und ein Hohlzahnrad am Innenumfang des Gehäuses in der Art eines Planetengetriebes zusammenwirken,
dadurch gekennzeichnet, daß die Zahnräder (8,8',10,10',11,11',17,17',18,18',19,19',21,27;22,28;23,25;24,26) von zwei benachbarten Förderwellen (3) axial zueinander versetzt angeordnet sind.

2. Schneckenmaschine nach Anspruch 1,
dadurch gekennzeichnet, daß jede Förderwelle (3) mit wenigstens einem Zahnrad versehen ist.

3. Schneckenmaschine nach Anspruch 1,
dadurch gekennzeichnet, daß jede Förderwelle (3) mit zwei oder mehr Zahnrädern versehen ist.

4. Schneckenmaschine nach den Ansprüchen 1 bis 3,
dadurch gekennzeichnet,daß das Hohlzahnrad und/oder das zentrale Zahnrad axial unterteilt ausgebildet sind und diese in Umfangsrichtung gegeneinander verdrehbar angeordnet sind.

5. Schneckenmaschine nach den Ansprüchen 1 bis 4,
dadurch gekennzeichnet, daß wenigstens ein Teil der Zahnräder mit einer Schrägverzahnung versehen ist.

6. Schneckenmaschine nach den Ansprüchen 1 bis 5,
dadurch gekennzeichnet, daß die Förderwellen (3) längs unterteilt ausgebildet sind.

7. Schneckenmaschine nach den Ansprüchen 1 bis 6,
dadurch gekennzeichnet, daß das Verhältnis aus der Zähnezahl des zentralen Zahnrades (7,7') plus der Zähnezahl des Hohlzahnrades (12) zu der Anzahl der Förderwellen (3) eine ganze Zahl ist.

8. Schneckenmaschine nach den Ansprüchen 1 bis 7,
dadurch gekennzeichnet, daß die Zähnezahl der Zahnräder der Anzahl der Förderwellen entspricht.
